# EUROPÄISCHE PATENTSCHRIFT

(11) **EP 3 685 409 B1**
(45) Veröffentlichungstag und Bekanntmachung des Hinweises auf die Patenterteilung: **05.01.2022**
(21) Anmeldenummer: 18799544.4
(22) Anmeldetag: 12.11.2018
(51) Int. Cl.: H01B 1/24, H01B 1/22, H05B 33/26

(54) **ZUSAMMENSETZUNG ZUM HERSTELLEN EINER ELEKTRISCH LEITFÄHIGEN SCHICHT, INSBESONDERE FÜR EINE ELEKTROLUMINESZENZ-VORRICHTUNG**
COMPOSITION FOR PRODUCING AN ELECTRICALLY CONDUCTIVE LAYER, IN PARTICULAR FOR AN ELECTROLUMINESCENT DEVICE
COMPOSITION DESTINÉE À LA FABRICATION D'UNE COUCHE ÉLECTROCONDUCTRICE, EN PARTICULIER POUR UN DISPOSITIF ÉLECTROLUMINESCENT

(30) Priorität: 29.11.2017 EP 17204479
(43) Veröffentlichungstag der Anmeldung: 29.07.2020
(73) Patentinhaber: InovisCoat GmbH, 40789 Monheim am Rhein (DE)
(72) Erfinder: GRÖTSCH, Georg, 84453 Mühldorf am Inn (DE); SCHMIDT, Rudolf, 51149 Köln (DE); TSCHORN, Tobias, 40595 Düsseldorf (DE)
(74) Vertreter: Zenz Patentanwälte Partnerschaft mbB
(86) Internationale Anmeldenummer: PCT/EP2018/080953
(87) Internationale Veröffentlichungsnummer: WO 2019/105726

(56) Entgegenhaltungen:
- EP-A1- 3 128 519
- WO-A1-96/16528
- US-A1- 2004 028 859

## Beschreibung

Die vorliegende Erfindung betrifft eine Zusammensetzung zum Herstellen einer elektrisch leitfähigen Schicht nach einem Schlitzdüsen-Verfahren, ein Verfahren zum Herstellen einer Elektrolumineszenz-Vorrichtung basierend auf der vorgenannten Zusammensetzung sowie eine Elektrolumineszenz-Vorrichtung als solche.

Elektrolumineszenz bezeichnet die Emission von Licht von chemischen Stoffen, die in ein elektrisches Feld gebracht werden. Das elektrische Feld wird dabei zwischen zwei leitfähigen Schichten, den Elektroden, mittels Wechselspannung erzeugt. Zwischen den beiden Elektroden sind in einem Dielektrikum die lichtemitierenden Chemikalien eingebettet. Damit das Licht das System verlassen kann, muss mindestens eine dieser beiden Elektroden eine Lichttransmission ermöglichen, wobei diese Elektrode regelmäßig als Frontelektrode bezeichnet wird. Die zweite leitfähige Schicht ist üblicherweise nicht transparent ausgestaltet und wird regelmäßig als Rückelektrode bezeichnet. Zusätzlich zu den drei vorgenannten Schichten sind meist noch Hilfsschichten vorhanden, die für einen stabilen Aufbau und Betrieb einer Elektrolumineszenz-Vorrichtung Sorge tragen.

Bei bekannten Elektrolumineszenz-Vorrichtungen stellt die Leuchtdichte regelmäßig noch ein Problem dar, d.h. die von der Elektrolumineszenz-Vorrichtung ausgestrahlte Lichtmenge ist nicht ausreichend, um eine übliche Elektrolumineszenz-Vorrichtung insbesondere für solche Anwendungen zu nutzen, bei denen eine hohe Leuchtkraft notwendig ist. Um eine hohe Leuchtdichte bei einer Elektrolumineszenz-Vorrichtung zu erreichen, ist es notwendig, dass zumindest eine der Elektroden, regelmäßig die Rückelektrode, Strom sehr gut leitet, d.h. einen geringen Flächenwiderstand aufweist. Da es sich bei Elektrolumineszenz-Vorrichtungen um Schichtanordnungen handelt, ist es gleichzeitig notwendig, dass die stromleitende Schicht, also die Rückelektrode, mit für die Herstellung von Schichtanordnungen bekannten Verfahren darstellbar ist. Die beiden vorgenannten Voraussetzungen, nämlich die gute elektrische Leitfähigkeit (bzw. der geringere Flächenwiderstand) der Rückelektrode sowie deren Herstellung mit bekannten Verfahren als sehr dünne Schicht widersprechen einander, da es bisher nicht möglich ist, solch dünne Schichten mit elektrisch hoher Leitfähigkeit in einer entsprechenden Schichtdicke herzustellen. Dieses Problem verschärft sich, wenn es notwendig oder gewünscht ist, bei der Herstellung der Elektrolumineszenz-Vorrichtung auf die Verwendung von organischen Lösungsmitteln zu verzichten.

Die US 2004/028859 A1 betrifft eine Zusammensetzung zum Herstellen einer elektrisch leitfähigen Schicht, welche darüber hinaus abschirmende Eigenschaften aufweist. Die Zusammensetzung umfasst u.a. eine Kombination aus zwei leitfähigen Partikeln, nämlich Kohlenstoffpartikeln und metallbeschichteten Keramikpartikeln. Die Leitfähigkeit von aus dieser Zusammensetzung hergestellten Schichten ist aber nicht groß genug, um bei einer Elektrolumineszenz-Vorrichtung zu erreichen.

Es ist Aufgabe der vorliegenden Erfindung, eine Zusammensetzung bereitzustellen, die es ermöglicht, auf der Basis eines wasserbasierten Systems dünne Schichten mit einer hohen Leitfähigkeit herzustellen.

Die Aufgabe wird gelöst durch eine Zusammensetzung zum Herstellen einer elektrisch leitfähigen Schicht nach Anspruch 1. Die erfindungsgemäße Zusammensetzung umfasst 2 - 30 Gew.-%, vorzugsweise 5 - 15 Gew.-%, einer in Wasser löslichen oder dispergierbaren Schutzkolloidmischung, 1 - 15 Gew.-%, vorzugsweise 2 - 10 Gew.-%, einer leitfähigen Kohlenstoffmodifikation, 5 - 50 Gew.-%, vorzugsweise 5 - 30 Gew.-%, metallbeschichteter Partikel, 50 - 90 Gew.-%, vorzugsweise 65 - 80%, eines wässrigen Lösungsmittels, insbesondere reinen Wassers, wobei die dynamische Viskosität der leitfähigen Zusammensetzung kleiner als 400 mPa·s ist. Erfindungsgemäß ist es wesentlich, dass die Zusammensetzung 0,1 - 10 Gew.-%, vorzugsweise 0,1 - 3 Gew.-%, eines Ethylen-Vinylacetat-Copolymers (als ein Bestandteil der Schutzkolloidmischung) umfasst.

Überraschenderweise hat sich herausgestellt, dass es bei Verwendung einer in Wasser löslichen oder dispergierbaren Schutzkolloidmischung mit einem erfindungsgemäßen Anteil eines Ethylen-Vinylacetat-Copolymers gelingt, den Flächenwiderstand der Zusammensetzung ganz erheblich zu vermindern, obgleich der Ethylen-Vinylacetat-Copolymer selbst nicht leitfähig ist. Es wird vermutet, dass es mit der erfindungsgemäßen Schutzkolloidmischung möglich ist, die leitfähigen Füllstoffe der Zusammensetzung, also die leitfähige Kohlenstoffmodifikation sowie die metallbeschichteten Partikel, derart in der Lösung zu halten, dass sich diese während des Produktionsprozesses nicht entmischen, damit sehr gleichmäßig aufgetragen werden und so der geringe Flächenwiderstand ermöglicht wird. Indem man die dynamische Viskosität der Zusammensetzung erfindungsgemäß kleiner als 400 mPa·s hält, ist die erfindungsgemäße Zusammensetzung mit einem Schlitzdüsen-Verfahren verarbeitbar.

Durch die Kombination der leitfähigen Kohlenstoffmodifikationen mit den metallbeschichteten Partikeln ist es überraschenderweise gelungen, bei Verwendung der erfindungsgemäßen Schutzkolloidmischung die elektrische Leitfähigkeit einer aus der erfindungsgemäßen Zusammensetzung hergestellten Schicht stark zu vergrößern, was sich in einem unerwartet kleinen Flächenwiderstand von weniger als 30 Ω/□, teilweise von weniger als 5 Ω/□, widerspiegelt. Es wird davon ausgegangen, dass die kleineren Partikel der Kohlenstoffmodifikation sich zwischen die metallbeschichteten Partikel setzen und so die Lücken zwischen den metallbeschichteten Partikeln füllen, was die Leitfähigkeit einer auf der Basis der erfindungsgemäßen Zusammensetzung hergestellten Elektrode erheblich erhöht. Die Mischung der beiden leitfähigen Füllstoffe, sprich der leitfähigen Kohlenstoffmodifikation sowie der metallbeschichteten Partikel, wirkt gegen ein anisotropes Verhalten der einzelnen Verbindungen und verhindert überraschenderweise Durchschlagseffekte durch ein zwischen Front- und Rückelektrode angeordnetes und die elektrolumineszenten Partikel aufweisendes Dielektrikum, wodurch eine Beschädigung einer Elektrolumineszenz-Vorrichtung, die eine Rückelektrode basierend auf der erfindungsgemäßen Zusammensetzung umfasst, im Rahmen des üblichen Anwendungsbereichs verhindert wird.

Mit der erfindungsgemäßen Zusammensetzung gelingt es also, trotz der Verwendung von Wasser als Lösungsmittel eine dünne elektrisch leitfähige Schicht herzustellen, die aufgrund des sehr geringen Flächenwiderstandes von weniger als 30 Ω/□ eine erhöhte Leuchtdichte einer Elektrolumineszenz-Vorrichtung ermöglicht, in welcher eine Elektrode auf der Basis der Zusammensetzung verwendet wird. Darüber hinaus wird durch die Vermeidung des Durchschlageffekts eine Beschädigung einer entsprechenden Elektrolumineszenz-Vorrichtung verhindert. Durch die Verwendung von Wasser als Lösungsmittel müssen ferner keine kostspieligen Absaugvorrichtungen zum Entfernen gesundheitsgefährlicher Lösungsmitteldämpfe verwendet werden.

Die erfindungsgemäße Zusammensetzung entfaltet ihre Wirkung in den oben genannten "breiten" Angaben zu den Gew.-%; die bevorzugten Bereiche wirken "besser", d.h. die Verminderung des Flächenwiderstandes ist bei einer Zusammensetzung gemäß der "engen" Angaben erheblicher.

Die einzelnen Komponenten der Zusammensetzung, also die Schutzkolloidmischung sowie die leitfähige Kohlenstoffmodifikation und die metallbeschichteten Partikel liegen als kommerziell erhältliche Verbindungen nicht rein vor, sondern als Dispersion, Suspension, Gele oder dergleichen mit einem gewissen Wirkstoffgehalt. Beispielsweise eine wässrige Schutzkolloid-Dispersion mit 50 % Wirkstoffgehalt liefert für die Zusammensetzung sowohl einen Anteil an dem wässrigen Lösungsmittel als auch an dem Schutzkolloid. Eine Zusammensetzung mit 20 Gew.-% einer kommerziell erhältlichen Schutzkolloid-Dispersion umfasst bei einem Wirkstoffgehalt von 50% also nur 10 Gew.-% Schutzkolloid.

Mit dem Begriff der "Schutzkolloidmischung" soll im Rahmen dieser Anmeldung nur dargelegt sein, dass die erfindungsgemäße Zusammensetzung zwei oder mehr verschiedene Schutzkolloide umfasst. Der Begriff der Mischung soll nicht ausdrücken, dass die Schutzkolloide beispielsweise bei der Herstellung der Zusammensetzung vermischt vorliegen müssen.

Die erfindungsgemäße Zusammensetzung ist dazu geeignet, nach einem Schlitzdüsen-Verfahren verarbeitet zu werden. Im Hinblick auf die Verwendung einer aus der Zusammensetzung hergestellten Elektrodenschicht ist es bevorzugt, dass die erfindungsgemäße Zusammensetzung nach dem KaskadenGießverfahren verarbeitet wird, was eine Spezialform des Schlitzdüsen-Verfahrens ist.

Die erfindungsgemäße Zusammensetzung umfasst eine Schutzkolloidmischung aus zwei oder mehr Schutzkolloiden, wobei es erfindungsgemäß wesentlich ist, dass die Zusammensetzung 0,1 - 10 Gew.-% eines Ethylen-Vinylacetat-Copolymers (als einen Bestandteil der Schutzkolloidmischung) umfasst - nur so kann der geringe Flächenwiderstand bzw. die erhöhte Leitfähigkeit erreicht werden.

Als weitere(s) Schutzkolloid(e) der Schutzkolloidmischung können unterschiedliche Verbindungen zum Einsatz kommen. Schutzkolloide sind meist Polymersysteme, die in Dispersionen ein Agglomerieren und Koagulieren einer dispergierten Substanz verhindern sollen und nach dem Trocknen die Schicht, in die die Füllstoffe eingebettet sind, formen. Als Schutzkolloide werden sowohl Naturstoffe wie Gelatine, Stärke, Chitosan, Casein und Dextrin und ihre Derivate verwendet, es können aber auch synthetische Polymere, wie Polyvinylalkohole, Polyvinylpyrrolidone, Polyacrylsäuren, Polyarcylate, Polyacrylamide, Polyurethane und gängige Copolymere eingesetzt werden.

Bei der erfindungsgemäßen Zusammensetzung sind zwei elektrisch leitfähige Füllstoffe mit unterschiedlichen Größen vorhanden, wobei sich die kleineren Partikel in die Zwischenräume der größeren Partikel setzen und diese "überbrücken". Bei Verwendung von zumindest zwei unterschiedlichen Schutzkolloiden scheint man die beiden unterschiedlichen Füllstoffe besonders gut in der Schwebe halten zu können.

Die erfindungsgemäße Zusammensetzung enthält 0,1 - 10 Gew.-% eines Ethylen-Vinylacetat-Copolymers (EVAC). Bei Zumischung der vorgenannten Menge kann eine erhebliche Verringerung des Flächenwiderstandes beobachtet werden, wie dies die weiter unten ausgeführten Daten beweisen. Besonders bevorzugt umfasst die Zusammensetzung 0,7 - 1,5 Gew.-% eines Ethylen-Vinylacetat-Copolymers. Die vorgenannte Menge scheint besonders gut geeignet, die Füllstoffe gleichmäßig verteilt in der Zusammensetzung zu halten, da die Flächenwiderstände von Elektroden auf der Basis entsprechender Zusammensetzungen besonders gering sind. Bei geringeren sowie größeren Mengen des Copolymers nehmen die Flächenwiderstände wieder zu. Warum gerade dieser Mengenbereich den Flächenwiderstand so maßgeblich vermindert konnte noch nicht geklärt werden.

Bei einer bevorzugten Ausführungsform umfasst die Zusammensetzung, neben dem EVAC-Copolymer, 2,5 - 25 Gew.-% Polyacrylat-Polymer. Es hat sich herausgestellt, dass dieses Schutzkolloid besonders gut mit dem EVAC-Copolymer zusammenwirkt.

Der Polyacrylattrockenauftrag entspricht einer Menge von 2,5 g/m² bis 25 g/m² und bevorzugt von 5 g/m² bis 15 g/m². Der EVAC-Auftrag entspricht einer Menge von 0,1 g/m² bis 10 g/m², bevorzugt 0,1 - 3 Gew.-% und besonders bevorzugt von 0,7 g/m² bis 1,5 g/m².

Im Hinblick auf die metallbeschichteten Partikel hat es sich herausgestellt, dass insbesondere silberbeschichtete Partikel wirksam sind, wobei der Partikel selbst vorzugsweise aus Glas oder Kupfer besteht, und zwar mit einer Silberbeschichtung von 20 - 60 Gew.-%. Besonders vorteilhaft ist die Verwendung von silberbeschichteten Glas- oder Kupferflakes, die sich durch ein hohes Aspektverhältnis (Breite/Länge im Verhältnis zur Höhe) auszeichnen. Vorzugsweise weisen die Flakes Aspektverhältnisse größer als 50 auf, besonders bevorzugt ist dieses größer als 75. Flakes mit einem entsprechenden Aspektverhältnis können auch bei Einsatz relativ geringer Mengen an Schutzkolloid gut in der Schwebe gehalten werden, was für eine homogene Verteilung in der aus der Zusammensetzung hergestellten Schicht wesentlich ist. Bevorzugt enthält das Stoffgemisch 5 - 50 Gew.-% silberbeschichtete Glas- oder Kupferpartikel, besonders bevorzugt 5 - 30 Gew.-% der Gesamtformulierung. Der Trockenauftrag entspricht einer Menge von 5 g/m² bis 50 g/m² und bevorzugt von 5 g/m² bis 30 g/m².

Elektrisch leitfähige Kohlenstoffmodifikationen können Kohlenstoff-Fasern und Nanoröhren, Graphit und Rußpartikel sein. Bevorzugt enthält das Stoffgemisch 1,0 - 15 Gew.-% eines kommerziell erhältlichen Graphits, bevorzugt 1,5 - 7,5 Gew.-% der Gesamtformulierung. Der Graphittrockenauftrag entspricht bevorzugt einer Menge von 1 g/m² bis 15 g/m² und bevorzugt von 1,5 g/m² bis 7,5 g/m².

Die vorliegende Erfindung betrifft ferner ein Verfahren zum Herstellen einer Elektrolumineszenz-Vorrichtung, aufweisend eine erste und eine zweite leitfähige Schicht sowie eine zwischen den leitfähigen Schichten angeordnete Leuchtschicht mit Elektrolumineszenzpigmenten, dadurch gekennzeichnet, dass die erste und/oder die zweite leitfähige Schicht auf der Basis der zuvor beschriebenen erfindungsgemäßen Zusammensetzung gedruckt bzw. gegossen wird. Durch die Verwendung der erfindungsgemäßen Zusammensetzung können Elektrolumineszenz-Vorrichtungen mit erhöhter Leuchtkraft hergestellt werden, ohne auf den Einsatz von organischen Lösungsmitteln oder dergleichen zurückgreifen zu müssen. Erst die erfindungsgemäße Zusammensetzung macht es überhaupt möglich, Elektrolumineszenz-Vorrichtungen mit stark erhöhter Leuchtkraft bei gleichzeitig sehr geringen Schichtdicken herzustellen, da nur die erfindungsgemäße Zusammensetzung aufgrund der recht geringen dynamischen Viskosität gieß- oder druckbar ist.

Bevorzugt kommt für die Herstellung der Elektrolumineszenz-Vorrichtung eine Gießapparatur zum Einsatz, die auf die jeweils erforderliche Breite angepasst werden kann. Die Elektrolumineszenz-Vorrichtung wird bevorzugt so hergestellt, dass sie mit Werkzeugen wie Scheren oder Schneidwalzen geschnitten werden kann, ohne die Funktion zu beeinträchtigen.

In einer weiteren Ausführung der Erfindung werden wenigstens eine Schicht, bevorzugt mehr als eine Schicht und besonders bevorzugt alle Schichten der Elektrolumineszenz-Vorrichtung unter Verwendung wasserbasierter Zusammensetzungen mit einem Druckverfahren, insbesondere einem Tintenstrahldruckverfahren aufgebracht.

Die Erfindung betrifft eine Elektrolumineszenz-Vorrichtung, aufweisend eine erste und eine zweite leitfähige Schicht sowie eine zwischen den leitfähigen Schichten angeordnete Leuchtschicht mit Elektrolumineszenzpigmenten, dadurch gekennzeichnet, dass die erste und/oder die zweite leitfähige Schicht erhältlich ist durch ein Drucken oder Gießen einer leitfähigen erfindungsgemäßen Zusammensetzung. Schließlich betrifft die Erfindung eine Verwendung einer leitfähigen Schicht erhältlich durch Drucken oder Gießen der erfindungsgemäßen Zusammensetzung zum Herstellen eines elektrolumineszenten Systems.

### Beispiele

Die nachfolgenden Beispiele dienen lediglich der Veranschaulichung und sind weder dazu gedacht, den Umfang der Erfindung einzuschränken, noch sollen sie einschränkend interpretiert werden.

### Materialien:

Die Chemikalien werden, wenn nicht explizit erwähnt, wie geliefert nach kräftigem Aufrühren ohne weitere Behandlung verwendet.
**eConduct Copper 044000** von Eckart GmbH: Silber (40 Gew.-%) beschichtete Kupferpartikel mit einer durchschnittlichen Größe (D50) von 4 µm
**eConduct Glass 205000** von Eckart GmbH: Silber (50 Gew.-%) beschichtete Glaspartikel mit einer durchschnittlichen Größe (D50) von 20 µm
**SG15TF40** von Potters Industries Inc.: Silber (40 Gew.-%) beschichtete Glaspartikel mit einer durchschnittlichen Größe von 15 µm
Ruß (Carbon Black) von Evonik Carbon Black GmbH: Wässrige Ruß-Dispersion (27% Gew.-% Feststoffanteil)
**Neromix E12** von Timcal Graphite & Carbon: Wässrige Graphit-Dispersion (30 Gew.-% Feststoffanteil)
**Acronal A310S** von BASF SE: Wässrige Dispersion eines Copolyacrylats (55 Gew.-% Feststoffanteil); bei allen Beispielen wird Acronal A310S entsprechend der technischen Daten bzw. Zusammensetzung vom Februar 2015 verwendet (https://www.dispersions-pigments.basf.com/portal/load/fid819873/TI_ED_1438_e_Acronal_A _310_S_186112_SCREEN_01.pdf).
**Aquatix 8421** von BYK Chemie GmbH: EVA-Wachsemulsion (20% Gew.-% Feststoffanteil); bei allen Beispielen wurde Aquatix 8421 entsprechend der Zusammensetzung gemäß dem technischen Datenblatt vom Oktober 2016 verwendet (https://additives.byk.com/output/ag_download.aspx?file=TDS_AQ UATIX_8421_DE.pdf).
**Afcona 3585** von Afcona Additives Sdn Bhd: Organisch modifiziertes Polysiloxan (5 Gew.-% Feststoffanteil); bei allen Beispielen wurde Afcona 3583 entsprechend der Zusammensetzung gemäß dem technischen Datenblatt vom Oktober 21017 verwendet (https://www.afcona.com.my/entAttchDL.php?iID=704).
**Afena** von Agfa Gevert: Endgruppenmodifiziertes Polyoxyethylen (5 Gew.-% Feststoffanteil).
**Laponite SL25** von BYK Chemie GmbH: Schichtsilikate (25 Gew.-% Feststoffanteil); bei allen Beispielen wurde Laponite SL25 entsprechend der Zusammensetzung gemäß dem technischen Datenblatt vom Oktober 2013 verwendet (https://additives.byk.com/output/ag_download.aspx?file=PB%20L aponite%20SL25_EN.pdf).

Bei den vorgenannten käuflichen Emulsionen / Dispersionen ist das Trägermaterial Wasser. Ggf. weitere enthaltene Additive haben auf die vorliegende Erfindung keinen Einfluss.

### Generelles Vorgehen:

Zunächst werden die Schutzkolloide und das Lösemittel vorgelegt und 10 Minuten mit einem Magnetrührer bei kleineren Ansätzen oder bei größeren Ansatzgrößen mit einem Blatt-/Propeller- oder Scheibenrührer im Kessel homogenisiert. Zu dieser Lösung/Dispersion werden die prozessbedingten Hilfsstoffe hinzugefügt und für weitere 10 Minuten homogenisiert. Das Gemisch wird anschließend bevorzugt auf 42°C temperiert. Die elektrisch leitfähigen Füllstoffe beeinflussen die physikalischen Eigenschaften der Lösung/Dispersion. Sie werden daher zu einem bestimmten Zeitpunkt vor dem Beschichtungsvorgang der Gießlösung hinzugefügt, um optimale Gießeigenschaften zu erzielen (Fließverhalten, Homogenität, Viskosität). Die Zusammensetzung ist derart abgestimmt, dass die dynamische Viskosität dieser mit den elektrisch leitfähigen Füllstoffen bei Gießtemperaturen zwischen 20 und 50 °C < 400 mPa·s ist.
**Beispiel 1.1:** Dieses Beispiel dient als Referenz ohne EVAC-Emulsion für das nachfolgende Beispiel 1.2.
   Das Stoffgemisch umfasst 52,7 Gew.-% demineralisiertes Wasser, 18,1 Gew.-% Acronal A310S, 0,9 Gew.-% Afcona 3585 (5%), 1,3 Gew.-% Afena, 11,7 Gew.-% Neromix E12 und 15,5 Gew.-% AgGlass-5µm SG05TF40. Bei einem Nassauftrag von 103,4 µm wurden Flächenwiderstände von 11,0 ± 3,2 Ω/□ erzielt.
**Beispiel 1.2:** Das Stoffgemisch umfasst 48,5 Gew.-% demineralisiertes Wasser, 15,7 Gew.-% Acronal A310S, 6,5 Gew.-% Aquatix 8421, 0,9 Gew.-% Afcona 3585 (5%), 1,3 Gew.-% Afena, 11,7 Gew.-% Neromix E12 und 15,5 Gew.-% AgGlass-5µm SG05TF40. Bei einem Nassauftrag von 103,4 µm wurden Flächenwiderstände von 2,8 ± 0,4 Ω/□ erzielt.
**Beispiel 2.1:** Dieses Beispiel dient als Referenz ohne EVAC-Emulsion für die nachfolgenden Beispiele 2.2 - 2.4.
   Das Stoffgemisch umfasst 52,7 Gew.-% demineralisiertes Wasser, 18,1 Gew.-% Acronal A310S, 0,9 Gew.-% Afcona 3585 (5%), 1,3 Gew.-% Afena, 11,7 Gew.-% Neromix E12 und 15,5 Gew.-% eConduct Copper 044000. Bei einem Nassauftrag von 103,4 µm wurden Flächenwiderstände von 28,5 ± 5,4 Ω/□ erzielt.
**Beispiel 2.2:** Das Stoffgemisch umfasst 50,6 Gew.-% demineralisiertes Wasser, 16,9 Gew.-% Acronal A310S, 3,2 Gew.-% Aquatix 8421, 0,9 Gew.-% Afcona 3585 (5%), 1,3 Gew.-% Afena, 11,7 Gew.-% Neromix E12 und 15,5 Gew.-% eConduct Copper 044000. Bei einem Nassauftrag von 103,4 µm wurden Flächenwiderstände von 7,9 ± 0,6 Ω/□ erzielt.
**Beispiel 2.3:** Das Stoffgemisch umfasst 48,5 Gew.-% demineralisiertes Wasser, 15,7 Gew.-% Acronal A310S, 6,5 Gew.-% Aquatix 8421, 0,9 Gew.-% Afcona 3585 (5%), 1,3 Gew.-% Afena, 11,7 Gew.-% Neromix E12 und 15,5 Gew.-% eConduct Copper 044000. Bei einem Nassauftrag von 103,4 µm wurden Flächenwiderstände von 4,9 ± 0,2 Ω/□ erzielt.
**Beispiel 2.4:** Das Stoffgemisch umfasst 46,5 Gew.-% demineralisiertes Wasser, 14,6 Gew.-% Acronal A310S, 9,7 Gew.-% Aquatix 8421, 0,9 Gew.-% Afcona 3585 (5%), 1,3 Gew.-% Afena, 11,7 Gew.-% Neromix E12 und 15,5 Gew.-% eConduct Copper 044000. Bei einem Nassauftrag von 103,4 µm wurden Flächenwiderstände von 15,5 ± 1,3 Ω/□ erzielt.
**Beispiel 3:** Das Stoffgemisch beinhaltet 48,5 Gew.-% demineralisiertes Wasser, 15,7 Gew.-% Acronal A310S, 6,5 Gew.-% Aquatix 8421, 0,9 Gew.-% Afcona 3585 (5%), 1,3 Gew.-% Afena, 11,7 Gew.-% Neromix E12 und 15,5 Gew.-% eConduct Copper 044000. Bei einem Nassauftrag von 103,3 µm wurden Flächenwiderstände von 7,8 ± 2,8 Ω/□ erzielt.
**Beispiel 4:** Das Stoffgemisch beinhaltet 48,5 Gew.-% demineralisiertes Wasser, 15,7 Gew.-% Acronal A310S, 6,5 Gew.-% Aquatix 8421, 0,9 Gew.-% Afcona 3585 (5%), 1,3 Gew.-% Afena, 11,7 Gew.-% Neromix E12 und 15,5 Gew.-% eConduct Glass 205000. Bei einem Nassauftrag von 103,3 µm wurden Flächenwiderstände von 17,5 ± 4,9 Ω/□ erzielt.
**Beispiel 5:** Das Stoffgemisch beinhaltet 51,3 Gew.-% demineralisiertes Wasser, 15,7 Gew.-% Acronal A310S, 6,5 Gew.-% Aquatix 8421, 0,9 Gew.-% Afcona 3585 (5%), 0,4 Gew.-% Afena, 9,7 Gew.-% Neromix E12 und 15,5 Gew.-% SG05TF40. Bei einem Nassauftrag von 103,3 µm wurden Flächenwiderstände von 4,9 ± 0,4 Ω/□ erzielt.
**Beispiel 6:** Das Stoffgemisch beinhaltet 60,3 Gew.-% demineralisiertes Wasser, 15,4 Gew.-% Acronal A310S, 1,1 Gew.-% Aquatix 8421, 0,7 Gew.-% Afcona 3585 (5%), 0,5 Gew.-% Afena, 0,8 Gew.-% Laponite SL25, 11,4 Gew.-% Neromix E12 und 10,1 Gew.-% SG05TF40. Bei einem Nassauftrag von 103,3 µm wurden Flächenwiderstände von 24,8 ± 1,3 Ω/□ erzielt.

Nachfolgend sind Beispiele noch einmal tabellarisch zusammengefasst, wobei noch einmal die bei den vorhergehenden Kurzbeschreibungen genannten Gew.-% der wässrigen Zusammensetzung aufgezeigt sind. Die Bestandteile der erfindungsgemäßen Zusammensetzung sind aber im Allgemeinen nicht in einem reinen Zustand erhältlich, sondern regelmäßig als Dispersionen, Suspensionen oder dergleichen, d. h. der Wirkstoffgehalt ist nicht 100 %, sondern regelmäßig deutlich geringer. Die nachfolgenden Tabellen umfassen auch die absoluten g-Angaben zu den Wirkstoffen; anhand der Gesamtmasse der Zusammensetzung lässt sich so die relative Wirkstoffmenge ermitteln. Alternativ kann man den Gew.-% der Wirkstoffe anhand des Wirkstoffgehaltes und der Angabe zu den Nass-% ermitteln (bei Beispiel 3 umfasst die wässrige Zusammensetzung beispielsweise 15,7 Nass-Gew.-% Acronal, bei einem Wirkstoffgehalt von 55% ergibt dies einen Gew.-% des Wirkstoffes von 8,64 Gew.-%).

**Tabelle 1: Zusammenfassung Beispiel 1.1, mit Lösungsmittel, im getrockneten Zustand**

| | **Beispiel 1.1** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 52,7 | 71,34 | 54,44 | 0 | 0 |
| Acronal | 0,55 | 18,1 | 9,95 | 18,71 | 10,29 | 34,72 |
| Aquatix | 0,2 | 0 | 0 | 0 | 0 | 0 |
| Afcona | 0,05 | 0,9 | 0,04 | 0,9 | 0,05 | 0,15 |
| Afena | 0,05 | 1,3 | 0,06 | 1,29 | 0,06 | 0,22 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,15 | 12,06 | 3,26 | 10,99 |
| Flakes | 1 | 15,5 | 15,46 | 15,98 | 15,98 | 53,92 |
| | | 100,2 | 100 | 103,38 | 29,64 | 100 |

**Tabelle 2: Zusammenfassung Beispiel 1.2, mit Lösungsmittel, im getrockneten Zustand**

| | **Beispiel 1.2** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 48,5 | 71,34 | 50,17 | 0 | 0 |
| Acronal | 0,55 | 15,7 | 8,65 | 16,27 | 8,95 | 30,19 |
| Aquatix | 0,2 | 6,5 | 1,3 | 6,71 | 1,34 | 4,53 |
| Afcona | 0,05 | 0,9 | 0,04 | 0,9 | 0,05 | 0,15 |
| Afena | 0,05 | 1,3 | 0,06 | 1,29 | 0,06 | 0,22 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,15 | 12,06 | 3,26 | 10,99 |
| Flakes | 1 | 15,5 | 15,46 | 15,98 | 15,98 | 53,93 |
| | | 100,1 | 100 | 103,38 | 29,64 | 100,01 |

**Tabelle 3: Zusammenfassung Beispiel 2.1, mit Lösungsmittel, im getrockneten Zustand**

| | **Beispiel 2.1** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 52,7 | 71,34 | 54,45 | 0 | 0 |
| Acronal | 0,55 | 18,1 | 9,95 | 18,71 | 10,29 | 34,72 |
| Aquatix | 0,2 | 0 | 0 | 0 | 0 | 0 |
| Afcona | 0,05 | 0,9 | 0,04 | 0,9 | 0,05 | 0,15 |
| Afena | 0,05 | 1,3 | 0,06 | 1,29 | 0,06 | 0,22 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,15 | 12,06 | 3,26 | 10,98 |
| Flakes | 1 | 15,5 | 15,46 | 15,98 | 15,98 | 53,93 |
| | | 100,2 | 100 | 103,39 | 29,64 | 100 |

**Tabelle 4: Zusammenfassung Beispiel 2.2, mit Lösungsmittel, im getrockneten Zustand**

| | **Beispiel 2.2** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 50,6 | 71,34 | 52,31 | 0 | 0 |
| Acronal | 0,55 | 16,9 | 9,3 | 17,49 | 9,62 | 32,45 |
| Aquatix | 0,2 | 3,2 | 0,65 | 3,36 | 0, 67 | 2,26 |
| Afcona | 0,05 | 0,9 | 0,04 | 0,9 | 0,05 | 0,15 |
| Afena | 0,05 | 1,3 | 0,06 | 1,29 | 0,06 | 0,22 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,15 | 12,06 | 3,26 | 10,99 |
| Flakes | 1 | 15,5 | 15,46 | 15,98 | 15,98 | 53,93 |
| | | 100,1 | 100 | 103,39 | 29,64 | 100 |

**Tabelle 5: Zusammenfassung Beispiel 2.3, mit Lösungsmittel, im getrockneten Zustand**

| | **Beispiel 2.3** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 48,5 | 71,34 | 50,18 | 0 | 0 |
| Acronal | 0,55 | 15,7 | 8,65 | 16,27 | 8,95 | 30,19 |
| Aquatix | 0,2 | 6,5 | 1,3 | 6,71 | 1,34 | 4,53 |
| Afcona | 0,05 | 0,9 | 0,04 | 0,9 | 0,05 | 0,15 |
| Afena | 0,05 | 1,3 | 0,06 | 1,29 | 0,06 | 0,22 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,15 | 12,06 | 3,26 | 10,99 |
| Flakes | 1 | 15,5 | 15,46 | 15,98 | 15,98 | 53,93 |
| | | 100,1 | 100 | 103,39 | 29,64 | 100,01 |

**Tabelle 6: Zusammenfassung Beispiel 2.4, mit Lösungsmittel, im getrockneten Zustand**

| | **Beispiel 2.4** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 46,5 | 71,33 | 48,04 | 0 | 0 |
| Acronal | 0,55 | 14,6 | 8,01 | 15,05 | 8,28 | 27,92 |
| Aquatix | 0,2 | 9,7 | 1,95 | 10,07 | 2,01 | 6,79 |
| Afcona | 0,05 | 0,9 | 0,04 | 0,9 | 0,05 | 0,15 |
| Afena | 0,05 | 1,3 | 0,06 | 1,29 | 0,06 | 0,22 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,15 | 12,06 | 3,26 | 10,98 |
| Flakes | 1 | 15,5 | 15,46 | 15,98 | 15,98 | 53,93 |
| | | 100,2 | 100 | 103,39 | 29,64 | 99,99 |

**Tabelle 7: Zusammenfassung Beispiel 3, mit Lösungsmittel, im getrockneten Zustand**

| | **Beispiel 3** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 48,5 | 71,28 | 50,15 | 0 | 0 |
| Acronal | 0,55 | 15,7 | 8, 64 | 16,23 | 8,93 | 30,08 |
| Aquatix | 0,2 | 6,5 | 1,3 | 6,72 | 1,34 | 4,53 |
| Afcona | 0,05 | 0,9 | 0,05 | 0,93 | 0,05 | 0,16 |
| Afena | 0,05 | 1,3 | 0,07 | 1,34 | 0,07 | 0,23 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,16 | 12,1 | 3,27 | 11,01 |
| Flakes | 1 | 15,5 | 15,5 | 16,03 | 16,03 | 54 |
| | | 100,1 | 100 | 103,5 | 29,69 | 100,01 |

**Tabelle 8: Zusammenfassung Beispiel 4, mit Lösungsmittel, im getrockneten Zustand**

| | **Beispiel 4** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 48,5 | 71,28 | 50,15 | 0 | 0 |
| Acronal | 0,55 | 15,7 | 8, 64 | 16,23 | 8,93 | 30,08 |
| Aquatix | 0,2 | 6,5 | 1,3 | 6,72 | 1,34 | 4,53 |
| Afcona | 0,05 | 0,9 | 0,05 | 0,93 | 0,05 | 0,16 |
| Afena | 0,05 | 1,3 | 0,07 | 1,34 | 0,07 | 0,23 |
| Laponite | 0,25 | 0 | 0 | 0 | 0 | 0 |
| DSDVU | 0,27 | 0 | 0 | 0 | 0 | 0 |
| Neromix | 0,3 | 11,7 | 3,16 | 12,1 | 3,27 | 11,01 |
| Flakes | 1 | 15,5 | 15,5 | 16,03 | 16,03 | 54 |
| | | 100,1 | 100 | 103,5 | 29,69 | 100,01 |

**Tabelle 9: Zusammenfassung Beispiel 5, mit Lösungsmittel, im getrockneten Zustand**

| | **Beispiel 5** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 51,3 | 71,87 | 52,99 | 0 | 0 |
| Acronal | 0,55 | 15,7 | 8, 64 | 16,22 | 8,92 | 30,71 |
| Aquatix | 0,2 | 6,5 | 1,3 | 6,71 | 1,34 | 4,62 |
| Afcona | 0,05 | 0,9 | 0,05 | 0,93 | 0,05 | 0,16 |
| Afena | 0,05 | 0,4 | 0,02 | 0,41 | 0,02 | 0,07 |
| Laponite | 0,25 | 0 | 0 | 0 | 0 | 0 |
| DSDVU | 0,27 | 0 | 0 | 0 | 0 | 0 |
| Neromix | 0,3 | 9,7 | 2,62 | 10,02 | 2,71 | 9,31 |
| Flakes | 1 | 15,5 | 15,5 | 16,01 | 16,01 | 55,12 |
| | | 100 | 100 | 103,29 | 29,05 | 99,99 |

**Tabelle 10: Zusammenfassung Beispiel 6, mit Lösungsmittel, im getrockneten Zustand**

| | **Beispiel 6** | | | | NA [µm]: 103,4 | |
|---|---|---|---|---|---|---|
| Chemikalie | Wirkstoffgehalt | Nass-% | Wirkstoff-% | Nass-g/m² | Trocken-g/m² | Trocken-% |
| Wasser | 0 | 60,3 | 77,52 | 62,29 | 0 | 0 |
| Acronal | 0,55 | 15,4 | 8,47 | 15,91 | 8,75 | 37,7 |
| Aquatix | 0,2 | 1,1 | 0,22 | 1,14 | 0,23 | 1 |
| Afcona | 0,05 | 0,7 | 0,04 | 0,72 | 0,04 | 0,2 |
| Afena | 0,05 | 0,5 | 0,03 | 0,52 | 0,03 | 0,1 |
| Laponite | 0,25 | 0, 8 | 0,2 | 0,83 | 0,21 | 0,9 |
| DSDVU | 0,27 | 0 | 0 | 0 | 0 | 0 |
| Neromix | 0,3 | 11,4 | 3,42 | 11,78 | 3,53 | 15,2 |
| Flakes | 1 | 10,1 | 10,1 | 10,43 | 10,43 | 44,9 |
| | | 100,3 | 100 | 103,62 | 23,22 | 100 |

Auf der Basis der oben genannten wässrigen Zusammensetzungen wurden Rückelektroden bevorzugt im Kaskadengießverfahren gegossen oder gedruckt und es wurde deren Flächenwiderstand und (teilweise die) dynamische Viskosität bestimmt. Zur Bestimmung des Flächenwiderstandes wurde ein Loresta-AX, Modell MCP-T370 verwendet, zur Messung der dynamischen Viskosität ein Rotationsviskosimeter Brookfield RVDV-II+Pro Extra.

Wie man der nachfolgenden Tabelle 11 entnehmen kann, die die Beispiele 1.1 - 2.4 zusammenfasst, ist der Flächenwiderstand der Zusammensetzungen mit dem EVAC-Copolymer wesentlich geringer als die der Zusammensetzungen ohne EVAC-Copolymer. Bei den Beispielen 1.1 und 2.1 umfasst die Zusammensetzung kein EVAC-Copolymer, bei den Beispielen 1.2, 2.2, 2.3, 2.4 ist EVAC-Copolymer in der Zusammensetzung vorhanden. Bei den Beispielen 1.1/1.2 bedingt die Zugabe von 6,5 Gew.-% Auqatix-Emulsion (entspricht 1,3 Gew.-% Ethylen-Vinylacetat-Copolymer bezogen auf die Gesamtmasse der Zusammensetzung) eine Verminderung des Flächenwiderstandes um fast 75%. Bei den Beispielen 2.1 - 2.4 erkennt man, dass der Gew.-%-Anteil des Ethylen-Vinylacetat-Copolymers entscheidenden Einfluss hat. Bei einem Anteil von 1,3 Gew.-% Ethylen-Vinylacetat-Copolymer (6,5% Emulsion mit 20% Wirkstoff- bzw. Polymeranteil) ist die Verminderung des Flächenwiderstandes am größten, während die Verminderung bei einem geringeren Gew.-%-Anteil (3,2 Gew.-% Emulsion, 0,64 Gew.-% Polymer) und einem größeren Gew.-%-Anteil (9,7 Gew.-% Emulsion, 1,94 Gew.% Polymer) deutlich geringer ausfällt. Die Verminderung durchläuft bei zunehmendem Gew.-% ein Maximum und fällt dann wieder ab.

Tabelle 12 fasst die Ergebnisse der Beispiele 3 - 6 (wenn man wie angemerkt Beispiele 6, 8 und 9 rausnimmt) zusammen. Auch hier kann man erkennen, dass der Flächenwiderstand bei allen Beispielen sehr gering ist. Ferner ist zu erkennen, dass dieser geringe Flächenwiderstand bei Zusammensetzungen mit geringer Viskosität erreicht werden kann.

Die Elektrolumineszenz-Vorrichtung kann nach bekannten Verfahren hergestellt werden. Beispielsweise ist es möglich, alle gießbaren Schichten der Elektrolumineszenz-Vorrichtung mit dem Kaskaden-Verfahren herzustellen, wobei die Rückelektrode auf der Basis der erfindungsgemäßen Zusammensetzung hergestellt wird. Nach welchem der vielen dem Fachmann bekannten Verfahren die Elektrolumineszenz-Vorrichtung hergestellt wird ist für die vorliegende Erfindung nicht wesentlich. Wesentlich ist, dass die erfindungsgemäße Zusammensetzung für zumindest die Rückelektrode verwendet wird, da nur so die hohen Lichtdichten erreicht werden.

**Tabelle 11: Zusammenfassung Beispiele 1.1 - 2.4, Ergebnisse Flächenwiderstand, Angabe der Gew.-% bezieht sich ggf. auf die Wirkstoffe als Emulsion etc.**

| | Einheit | Bsp. 1.1 | Bsp. 1.2 | Bsp. 2.1 | Bsp. 2.2 | Bsp. 2.3 | Bsp. 2.4 |
|---|---|---|---|---|---|---|---|
| Lösemittel | % | 52,7 | 48,5 | 52,7 | 50,6 | 48,5 | 46,5 |
| Binder | % | 18,1 | 15,7 | 18,1 | 16,9 | 15,7 | 14,6 |
| Aquatix | | 0 | 6,5 | 0 | 3,2 | 6,5 | 9,7 |
| AgCu-4µm | % | 0 | 0 | 15,5 | 15,5 | 15,5 | 15,5 |
| AgGlass-20µm | % | | | | | | |
| AgGlass-5µm | % | 15,5 | 15,5 | 0 | 0 | 0 | 0 |
| Graphit | % | | | | | | |
| Leitruß | % | 11,7 | 11,7 | 11,7 | 11,7 | 11,7 | 11,7 |
| Hilfsstoffe | % | 2,1 | 2,1 | 2,1 | 2,1 | 2,1 | 2,1 |
| Rheologiemodifikator | % | | | | 1,0 | 0, 8 | |
| Drehzahl 1 | min-1 | | | | - | - | |
| Viskosität 1 | mPa·s | | | | - | - | |
| Drehzahl 2 | min-1 | | | | - | - | |
| Viskosität 2 | mPa·s | | | | - | - | |
| Thixotropie-Index | | | | | | | - |
| Nassauftrag | µm | 103,3 | 103,3 | 103,3 | 114,7 | 103,3 | 239,4 |
| Flächenwiderstand | Ω/□ | 11 | 2,8 | 28,5 | 7,9 | 4,9 | 15,5 |
| Standardabweichung | Ω/□ | 3,2 | 0,4 | 5,4 | 0, 6 | 0,2 | 1,3 |

**Tabelle 12: Zusammenfassung Beispiele 3 - 9, Ergebnisse Flächenwiderstand**

| | Einheit | Beispiel 3 | Beispiel 4 | Beispiel 5 | Beispiel 6 |
|---|---|---|---|---|---|
| Lösemittel | % | 48,5 | 48,5 | 51,3 | 60,3 |
| Binder | % | 15,7 | 15,7 | 15,7 | 15,4 |
| Aquatix | % | 6,5 | 6,5 | 6,5 | 1,1 |
| AgCu-4µm | % | 15,5 | | | |
| AgGlass-20µm | % | | 15,5 | | |
| AgGlass-5µm | % | | | 15,5 | 10,1 |
| Graphit | % | 11,7 | 11,7 | 9,7 | 11,4 |
| Leitruß | % | | | | |
| Hilfsstoffe | % | 2,2 | 2,2 | 1,3 | 1,2 |
| Rheologiemodifikator | % | | | | 0, 8 |
| Drehzahl 1 | min⁻¹ | 20 | 20 | 20 | - |
| Viskosität 1 | mPa·s | 0 | 16,2 | 0 | - |
| Drehzahl 2 | min⁻¹ | 200 | 200 | 200 | - |
| Viskosität 2 | mPa·s | 4,6 | 31,8 | 3,9 | - |
| Thixotropie-Index | | - | 1,96 | - | - |
| Nassauftrag | µm | 103,3 | 103,3 | 103,3 | 103,3 |
| Flächenwiderstand | Ω/□ | 7,8 | 17,5 | 4,9 | 24,8 |
| Standardabweichung | Ω/□ | 2,8 | 4,9 | 0,4 | 1,3 |

Auf der Basis der erfindungsgemäßen Zusammensetzung lassen sich demnach Elektrolumineszenz-Vorrichtungen mit erhöhter Leuchtdichte herstellen, was den Anwendungsbereich dieser wesentlich erhöht. Dies gelingt mithilfe der erfindungsgemäßen Zusammensetzung, bei welcher überraschenderweise trotz Verwendung eines wässrigen Lösungsmittels, vorzugsweise reinen Wassers, aufgrund der Verwendung eines Schutzkolloids mehrere leitfähige Füllstoffe derart dispergiert werden können, dass auf der Basis dieser Zusammensetzung eine Rückelektrode mit stark erhöhter Leitfähigkeit erhalten werden kann. Erfindungsgemäß gelingt es demnach, eine Entmischung der Zusammensetzung zu vermeiden, insbesondere die elektrisch leitfähigen Füllstoffe werden in der Schwebe gehalten und sind dadurch in der späteren Elektrode derart gut verteilt, dass die erhöhte Leitfähigkeit resultiert.

## Patentansprüche

1. Zusammensetzung zum Herstellen einer elektrisch leitfähigen Schicht nach einem Schlitzdüsen-Verfahren, aufweisend
2 - 30 Gew.-% einer in Wasser löslichen oder dispergierbaren Schutzkolloidmischung,
1 - 15 Gew.-% einer leitfähigen Kohlenstoffmodifikation,
5 - 50 Gew.-% metallbeschichteter Partikel,
50 - 90 Gew.-% eines wasserhaltigen Lösungsmittels,
wobei die dynamische Viskosität der leitfähigen Zusammensetzung kleiner als 400 mPa·s ist,
**dadurch gekennzeichnet, dass** die Zusammensetzung 0,1 - 10 Gew.-% eines Ethylen-Vinylacetat-Copolymers umfasst.

2. Zusammensetzung zum Herstellen einer elektrisch leitfähigen Schicht nach einem Schlitzdüsen-Verfahren nach Anspruch 1, aufweisend
5 - 15 Gew.-% einer in Wasser löslichen oder dispergierbaren Schutzkolloidmischung,
2 - 10 Gew.-% einer leitfähigen Kohlenstoffmodifikation,
5 - 30 Gew.-% metallbeschichteter Partikel,
65 - 80 Gew.-% eines wasserhaltigen Lösungsmittels,
wobei die dynamische Viskosität der leitfähigen Zusammensetzung kleiner als 400 mPa·s ist,
**dadurch gekennzeichnet, dass** die Zusammensetzung 0,1 - 3 Gew.-%, vorzugsweise 0,7 - 1,5 Gew.%, eines Ethylen-Vinylacetat-Copolymers umfasst.

3. Zusammensetzung zum Herstellen einer elektrisch leitfähigen Schicht nach einem Schlitzdüsen-Verfahren nach - Anspruch 1 oder 2, **dadurch gekennzeichnet, dass** die Zusammensetzung 2,5 - 25 Gew.-%, vorzugsweise 5 - 15 Gew.-%, Polyacrylat umfasst

4. Zusammensetzung zum Herstellen einer elektrisch leitfähigen Schicht nach einem Schlitzdüsen-Verfahren nach einem der Ansprüche 1 - 3, **dadurch gekennzeichnet, dass** die metallbeschichteten Partikel silberbeschichtet sind.

5. Zusammensetzung zum Herstellen einer elektrisch leitfähigen Schicht nach einem Schlitzdüsen-Verfahren nach Anspruch 4, **dadurch gekennzeichnet, dass** die silberbeschichteten Partikel silberbeschichtete Kupfer- oder vorzugsweise Glaspartikel sind, deren Silberbeschichtung 20 - 60 Gew.-% beträgt.

6. Zusammensetzung zum Herstellen einer elektrisch leitfähigen Schicht nach einem Schlitzdüsen-Verfahren nach Anspruch 5, **dadurch gekennzeichnet, dass** die silberbeschichteten Glas- oder Kupferpartikel die Form von Flakes mit einem hohen Aspektverhältnis aufweisen.

7. Zusammensetzung zum Herstellen einer elektrisch leitfähigen Schicht nach einem Schlitzdüsen-Verfahren nach einem der Ansprüche 1 - 6, **dadurch gekennzeichnet, dass** die leitfähige Kohlenstoffmodifikation ausgewählt ist aus einer Gruppe bestehend aus Graphit, Rußpartikel, Nanoröhren.

8. Verfahren zum Herstellen einer Elektrolumineszenz-Vorrichtung, aufweisend eine erste und eine zweite leitfähige Schicht sowie eine zwischen den leitfähigen Schichten angeordnete Leuchtschicht mit Elektrolumineszenzpigmenten, **dadurch gekennzeichnet, dass** die erste und/oder die zweite leitfähige Schicht auf der Basis einer Zusammensetzung nach einem der Ansprüche 1 - 7 gedruckt bzw. gegossen wird.

9. Elektrolumineszenz-Vorrichtung, aufweisend eine erste und eine zweite leitfähige Schicht sowie eine zwischen den leitfähigen Schichten angeordnete Leuchtschicht mit Elektrolumineszenspigmenten, **dadurch gekennzeichnet, dass** die erste und/oder die zweite leitfähige Schicht erhältlich ist durch ein Drucken oder Gießen einer leitfähigen Zusammensetzung nach einem der Ansprüche 1 - 7.

10. Verwendung einer leitfähigen Schicht erhältlich durch Drucken oder Gießen einer Zusammensetzung nach einem der Ansprüche 1 - 7 zum Herstellen eines elektrolumineszenten Systems.

## Claims

1. Composition for producing an electrically conductive layer by a slot die process, comprising
2 - 30 % by weight of a protective colloid mixture which is soluble or dispersible in water,
1 - 15% by weight of a conductive carbon modification,
5 - 50 % by weight of metal-coated particles,
50 - 90 % by weight of a water-containing solvent,
wherein the dynamic viscosity of the conductive composition is less than 400 mPa·s,
**characterized in that** the composition comprises 0.1-10% by weight of an ethylene-vinyl acetate copolymer.

2. Composition for producing an electrically conductive layer by a slot die process according to claim 1, comprising
5 - 15 % by weight of a protective colloid mixture which is soluble or dispersible in water,
2 - 10% by weight of a conductive carbon modification,
5 - 30 % by weight of metal-coated particles,
65 - 80 % by weight of a water-containing solvent,
wherein the dynamic viscosity of the conductive composition is less than 400 mPa·s,
**characterized in that** the composition comprises 0.1-3% by weight, preferably 0.7-1.5% by weight, of an ethylene-vinyl acetate copolymer.

3. Composition for producing an electrically conductive layer by a slot die process according to -claim 1 or 2, **characterized in that** the composition comprises 2.5-25% by weight, preferably 5-15% by weight, of polyacrylate

4. Composition for producing an electrically conductive layer by a slot die process according to any one of claims 1 - 3, **characterized in that** the metal-coated particles are silver-coated.

5. Composition for producing an electrically conductive layer according to a slot die process according to claim 4, **characterized in that** the silver-coated particles are silver-coated copper or preferably glass particles whose silver coating is 20-60% by weight.

6. Composition for producing an electrically conductive layer by a slot die process according to claim 5, **characterized in that** the silver-coated glass or copper particles are in the form of flakes having a high aspect ratio.

7. Composition for producing an electrically conductive layer by a slot die process according to any one of claims 1 - 6, **characterized in that** the conductive carbon modification is selected from a group consisting of graphite, carbon black particles, nanotubes.

8. Method for producing an electroluminescent device comprising a first and a second conductive layer and a luminescent layer with electroluminescent pigments arranged between the conductive layers, **characterized in that** the first and/or the second conductive layer is printed or cast on the basis of a composition according to one of claims 1 - 7.

9. Electroluminescent device comprising first and second conductive layers and a luminescent layer comprising electroluminescent pigments disposed between the conductive layers, **characterized in that** the first and/or second conductive layer is obtainable by printing or casting a conductive composition according to any one of claims 1-7.

10. Use of a conductive layer obtainable by printing or casting a composition according to any one of claims 1 - 7 for producing an electroluminescent system.

## Revendications

1. Composition pour produire une couche électriquement conductrice par un procédé de filière à fente, la couche comprenant
2 à 30 % en poids d'un mélange colloïdal protecteur soluble ou dispersable dans l'eau,
1 à 15 % en poids d'une modification conductrice du carbone,
5 à 50 % en poids de particules revêtues de métal,
50 à 90 % en poids d'un solvant contenant de l'eau,
dans laquelle la viscosité dynamique de la composition conductrice est inférieure à 400 mPa·s,
**caractérisée en ce que** la composition comprend 0,1 à 10 % en poids d'un copolymère éthylène-acétate de vinyle.

2. Composition pour produire une couche électriquement conductrice par un procédé de filière à fente selon la revendication 1, comprenant
5 à 15 % en poids d'un mélange de colloïdal protecteur soluble ou dispersible dans l'eau,
2 à 10 % en poids d'une modification conductrice du carbone,
5 à 30 % en poids de particules revêtues de métal,
65 à 80 % en poids d'un solvant contenant de l'eau,
dans laquelle la viscosité dynamique de la composition conductrice est inférieure à 400 mPa·s,
**caractérisée en ce que** la composition comprend 0,1 à 3% en poids, de préférence 0,7 à 1,5% en poids, d'un copolymère éthylène-acétate de vinyle.

3. Composition pour produire une couche électriquement conductrice selon un procédé de filière à fente selon la revendication 1 ou 2, **caractérisée en ce que** la composition comprend 2,5 à 25% en poids, de préférence 5 à 15% en poids, de polyacrylate.

4. Composition pour produire une couche électriquement conductrice par un procédé de filière à fente selon l'une quelconque des revendications 1 à 3, **caractérisée en ce que** les particules revêtues de métal sont revêtues d'argent.

5. Composition pour la production d'une couche électriquement conductrice selon un procédé de filière à fente selon la revendication 4, **caractérisée en ce que** les particules revêtues d'argent sont des particules de cuivre revêtues d'argent ou de préférence de verre, dont le revêtement d'argent est de 20 à 60 % en poids.

6. Composition pour produire une couche électriquement conductrice par un procédé de filière à fente selon la revendication 5, **caractérisée en ce que** les particules de verre ou de cuivre revêtues d'argent sont sous la forme de paillettes ayant un rapport d'aspect élevé.

7. Composition pour produire une couche électriquement conductrice par un procédé de filière à fente selon l'une quelconque des revendications 1 à 6, **caractérisée en ce que** la modification de carbone conducteur est choisie dans un groupe constitué par le graphite, les particules de noir de carbone, les nanotubes.

8. Procédé pour la fabrication d'un dispositif électroluminescent, comprenant une première et une deuxième couche conductrice et une couche luminescente avec des pigments électroluminescents, la couche luminescente étant disposée entre les couches conductrices, **caractérisé en ce que** la première et/ou la deuxième couche conductrice est imprimée ou coulée, respectivement, sur la base d'une composition selon l'une des revendications 1 à 7.

9. Dispositif électroluminescent comprenant des première et seconde couches conductrices et une couche luminescente comprenant des pigments électroluminescents disposés entre les couches conductrices, **caractérisé en ce que** la première et/ou la seconde couche conductrice peuvent être obtenues par impression ou coulage d'une composition conductrice selon l'une quelconque des revendications 1 à 7.

10. Utilisation d'une couche conductrice pouvant être obtenue par impression ou coulée d'une composition selon l'une quelconque des revendications 1 à 7 pour produire un système électroluminescent.
